# EUROPÄISCHE PATENTSCHRIFT

(11) **EP 1 747 717 B1**
(45) Veröffentlichungstag und Bekanntmachung des Hinweises auf die Patenterteilung: **21.10.2009**
(21) Anmeldenummer: 06115215.3
(22) Anmeldetag: 09.06.2006
(51) Int. Cl.: A01K 1/02

(54) **Ferkelnest**
Shelter for piglets
Abri pour porcelets

(30) Priorität: 27.07.2005 CH 12642005
(43) Veröffentlichungstag der Anmeldung: 31.01.2007
(73) Patentinhaber: Inauen R. AG, 9050 Appelzell AI (CH)
(72) Erfinder: Inauen, Urs, 9050 Appenzell AI (CH); Morgenegg, Fritz, 9246 Niederbüren SG (CH)
(74) Vertreter: Frommhold, Joachim

(56) Entgegenhaltungen:
- DE-A1- 3 620 089
- DATABASE WPI Week 199213 Derwent Publications Ltd., London, GB; AN 1992-102905 XP002406069 -& NL 9 001 794 A (DE LANGE J) 2. März 1992 (1992-03-02)

## Beschreibung

Die Erfindung betrifft ein Ferkelnest in einer Abferkelbox für den Aufenthalt einer Sau nach dem Wurf mit ihren Ferkeln.

Bei der Stall- oder Boxenhaltung von Schweinen besteht die Gefahr, dass die Ferkel, insbesondere kurz nach dem Wurf von der Muttersau verletzt oder getötet werden können, zum Beispiel beim Hinlegen der Muttersau infolge der begrenzten Platzverhältnisse in den Boxen.

Von daher wurden viele Vorschläge unterbreitet, die Ferkel zu schützen. So beschreibt die DE-OS-2219609 eine Abferkelbox dergestalt vor, dass die Sau von einem Schutzrahmen umgeben ist, aus dem sie nicht aussteigen kann und an dem auch ein Futtertrog für die Sau befestigt ist. Die einzelnen Holme und Bügel des Schutzrahmens sind so weit voneinander angeordnet, dass die Ferkel Zugang zur Sau haben und ungehindert saugen können.

Eine weitere Ausführung eines trennenden Gestells beschreibt die DE-U-8323144, wobei zeitweilige Trennung der Ferkel von der Sau mittels eines scherengitterartig aufklappbaren Gestells erfolgt. Das Gestell ist auf dem Stallboden befestigt und besteht aus zwei an der senkrechten Säule beweglich angebrachten horizontalen Bügeln und mehreren beweglich an diesen Bügeln angebrachten Abweisern in Form eines Zauns, so dass der Schutzkorb parallelförmig hochklappbar ist.

Die EP-A-0144307 offenbart eine Ferkelbox, die einen die Sau umgebenden Schutzrahmen und die eigentliche Ferkelbox in einem viereckigen Stall enthält. Die Ferkelbox ist in einer Ecke des Stalles angeordnet und wird von zwei Stallwänden und zwei Seitenwänden so begrenzt, dass sich ein kegelstumpfförmiger Grundriss ergibt. Die Ferkelbox weist in einer Seitenwand eine Zugangsöffnung für die Ferkel auf und ist mit einem Deckel abgedeckt. Auf bzw. im Deckel können noch Heizmittel angebracht sein.

Eine weitere Ferkelbox zeigt die DE-U-8410490, bei der in einem ebenfalls viereckigen Stall zwei weitgehend parallel und in Richtung auf die Stalltür verlaufende Schutzbügel zum Einstellen der Sau angeordnet sind und wobei mindestens ein Schutzbügel lösbar an einer Seitenwand des Stalles befestigt ist. Die türferne Stirnseite der durch die Schutzbügel gebildeten Box ist teleskopartig verfahrbar. Der Raum zwischen den Schutzbügeln kann zumindest im Türbereich soweit verbreitert werden, dass sich die Sau in der Abferkelbox umdrehen kann.

In der NL-A-9001794 ist ein Ferkelnest mit einer weitgehend geschlossenen Abdeckung offenbart, das lediglich einzelne Durchgänge offen lässt.

Die DE-A-3620089 offenbart einen rechteckigen Koben, der durch ein im Wesentlichen gerades Schutzgitter in zwei gleichschenklige Dreiecke unterteilt wird.

Das Schutzgitter ermöglicht nur den Ferkeln eine Passage von einem Teil des Kobens in den anderen Teil.

Der Erfindung liegt die Aufgabe zugrunde, ein Ferkelnest in einer Abferkelbox zu schaffen, das Sau und Ferkeln ausreichend Bewegungsraum in der Box und den Ferkeln zudem Schutz bietet. Die Aufgabe ist mit den Merkmalen des Patentanspruchs 1 gelöst.

Das Ferkelnest weist einen konvex, insbesondere kreissegmentförmig gebogenen Schutzbügel auf, der eine Ecke der Abferkelbox von der gesamten Fläche der Abferkelbox trennt, wobei die Aufnahme und Halterung des Schutzbügels an den Seitenwänden variabel ist. Dies ermöglicht bei vergleichsweise grosser Fläche für das Ferkelnest mit nur geringen Seitenlängen der Seitenwände der Abferkelbox auszukommen und sich zugleich einem natürlichen Nestgrundriss anzunähern.

Bevorzugte Ausführungsformen sind in den Unteransprüchen offenbart. So kann die Länge der Seitenwände kann ungleich gewählt werden. Der Schutzbügel ist rechts wie links montierbar.

Die Rundung des Schutzbügels kann ebenso elliptisch sein oder auch durch geeignete Anordnung mehrerer gerader Teilstücke usw. erreicht werden.

Bevorzugt ist das Ferkelnest nach oben mit einem aufklappbaren Deckel begrenzt, dessen Vorderseite ebenfalls gerundet ist und an dessen Vorderseite weiterhin bevorzugt ein Vorhang angebracht ist um die Ferkel auch optisch von der übrigen Abferkelbox zu trennen. Der Vorhang kann einteilig oder mehrteilig ausgebildet sein.

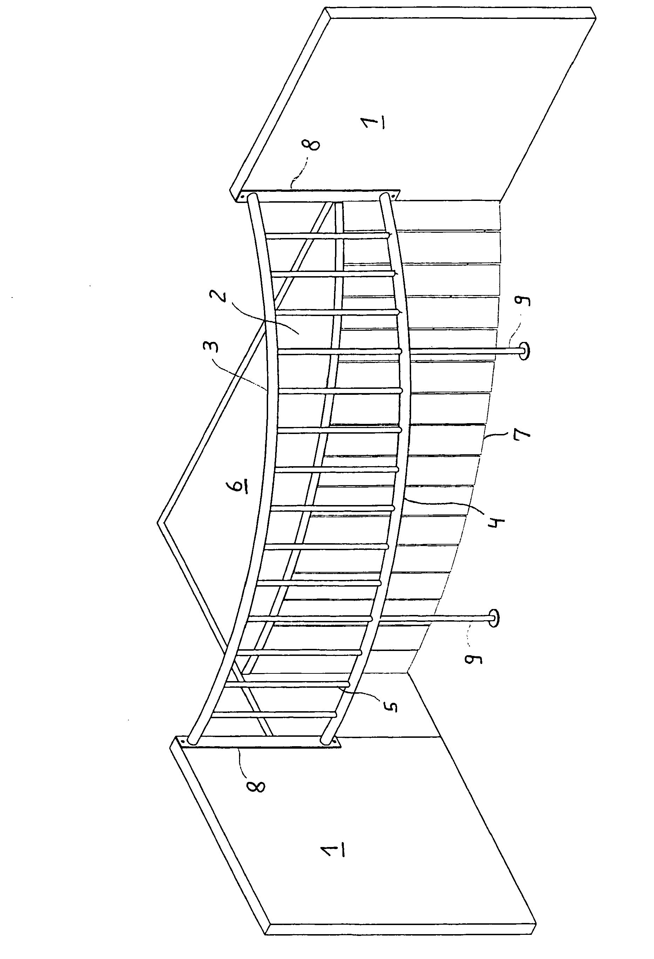

Die Erfindung wird nachfolgend in einem Ausführungsbeispiel anhand einer Zeichnung näher beschrieben. Die Zeichnung zeigt perspektivisch die Anordnung eines Ferkelnestes in einer nur angedeuteten Abferkelbox.

Die Abferkelbox ist mit zwei Seitenwänden 1 (zu einem Gang resp. einer Nachbarbox etc.), die in einer Ecke zusammenlaufen angedeutet. Die Ecke ist mit einem konvex gebogenen Schutzbügel 2 abgetrennt, der mit Halterungen 8 an den Seitenwänden 1 befestigt ist. Der Schutzbügel 2 selbst besteht aus zwei parallelen, gebogenen Rohren 3, 4, zwischen denen Stege 5 in regelmässigen Abständen angeschweisst sind. Etwa mittig ist der Schutzbügel 2 zudem mittels einer Stütze 9 auf dem Boden der Abferkelbox abgestützt. Der Schützbügel ist so gehalten, dass er um einen Drehpunkt einer Halterung 8 schwenkbar und/oder nach vorn und oben aufklappbar ist.

Die das Ferkelnest begrenzenden Längen der Seitenwände 1 können gleich oder ungleich gross sein.

Nach oben ist das Ferkelnest mittels eines in die Ecke eingepassten Deckels 6 begrenzt, wobei die Vorderseite des Deckels 6 analog zum Schutzbügel 2 gerundet ist. An dieser Vorderseite ist ein Vorhang 7 aus Plastikstreifen befestigt. Der Deckel 6 ist aufklappbar und kann bei Bedarf mit Heizmitteln versehen sein.

Die Seitenwände 1 sind im Bereich des Ferkelnestes abgesenkt um einen besseren Zugang von aussen zu erreichen und um die Anbringung des Deckels 6 zu vereinfachen.

Gegenüber dreieckig oder viereckig ausgebildeten Ferkelnestern ergibt sich eine bessere Sanitation resp. Flächenausnutzung.

### Bezugszeichen

- 1: Seitenwand
- 2: Schutzbügel
- 3: Rohr
- 4: Rohr
- 5: Steg
- 6: Deckel
- 7: Vorhang
- 8: Halterung
- 9: Stütze

## Patentansprüche

1. Ferkelnest in einer Abferkelbox oder dergleichen, das durch Seitenwände der Abferkelbox und Schutzbügel oder dergleichen begrenzt ist, **dadurch gekennzeichnet, dass** der Schutzbügel (2) konvex gebogen ist und in einer, aus zwei zusammenstossenden Seitenwänden (1) gebildeten Ecke der Abferkelbox angeordnet ist, wobei der Schutzbügel (2) an den Seitenwänden (1) variabel befestigbar ist.

2. Ferkelnest nach Anspruch 1, **dadurch gekennzeichnet, dass** der Schutzbügel (2) aus gebogenen, parallel angeordneten Profilen mit dazwischen befestigten Stegen (5) besteht.

3. Ferkelnest nach Ansprüche 1 oder 2, **dadurch gekennzeichnet, dass** es nach oben durch einen Deckel (6) begrenzt ist.

4. Ferkelnest nach Anspruch 3, **dadurch gekennzeichnet, dass** an einer gebogenen Vorderseite des Deckels (6) ein Vorhang (7) angeordnet ist.

5. Ferkelnest nach Anspruch 1, **dadurch gekennzeichnet, dass** die konvexe Rundung des Schutzbügels (2) kreissegmentförmig oder elliptisch ausgebildet ist.

## Claims

1. Shelter for piglets in a box or a similar device, which is closed by the sidewalls of the box and a protective bar, **characterized in that** the protective bar (2) has a convex arcuate form and is arranged in a corner of the box formed by two joining sidewalls (1), wherein the protective bar (2) can be variably fixed at said sidewalls (1).

2. Shelter for piglets according to claim 1, **characterized in that** the protective bar (2) comprises arcuate profiles in parallel arrangement with webs (5) fixed between them.

3. Shelter for piglets according to claim 1 or 2, **characterized in that** it is limited to its top by a lid (6).

4. Shelter for piglets according to claim 3, **characterized in that** a curtain (7) is arranged at an arcuate front side of the lid (6).

5. Shelter for piglets according to claim 1, **characterized in that** the convex arc of the protective bar (2) is elliptical or covers a segment of a circle.

## Revendications

1. Abri pour porcelets dans un box pour porcelets ou similaire, qui est limité par des parois latérales du box et une barre de protection ou similaire, **caractérisé en ce que** la barre de protection (2) est arqué d'une manière convexe est qu'elle est arrangée dans un coin formé par assemblage de deux parois latérales (1), où la barre de protection (2) est fixée aux parois latérales (1) d'une manière variable.

2. Abri pour porcelets selon la revendication 1, **caractérisé en ce que** la barre de protection (2) est composée de profils arqués arrangés parallèlement avec des traverses (5) fixées entre ceux-ci.

3. Abri pour porcelets selon la revendication 1 ou 2, **caractérisé en ce qu'**il est délimité vers le haut par un couvercle (6).

4. Abri pour porcelets selon la revendication 3, **caractérisé en ce qu'**un rideau (7) est arrangé près de la face avant arquée du couvercle (6).

5. Abri pour porcelets selon la revendication 1, **caractérisé en ce que** la rondeur convexe de la barre de protection (2) est formée d'une manière elliptique ou d'un segment d'un cercle.
